# EUROPÄISCHE PATENTSCHRIFT

(11) **EP 4 311 735 B1**
(45) Veröffentlichungstag und Bekanntmachung des Hinweises auf die Patenterteilung: **28.08.2024**
(21) Anmeldenummer: 22187854.9
(22) Anmeldetag: 29.07.2022
(51) Int. Cl.: B60T 13/74

(54) **MEHRKOMPONENTENZAHNRAD FÜR EINE GETRIEBEANORDNUNG EINES BREMSAKTUATORS, BREMSAKTUATOR MIT EINEM SOLCHEN MEHRKOMPONENTENZAHNRAD SOWIE VERFAHREN ZUM HERSTELLEN EINES SOLCHEN MEHRKOMPONENTENRADES**
MULTI-COMPONENT GEAR FOR A TRANSMISSION ASSEMBLY OF A BRAKE ACTUATOR, BRAKE ACTUATOR COMPRISING SUCH A MULTI-COMPONENT GEAR AND METHOD FOR MANUFACTURING SUCH A MULTI-COMPONENT GEAR
ENGRENAGE À COMPOSANTS MULTIPLES POUR UN ENSEMBLE ENGRENAGE D'UN ACTIONNEUR DE FREIN, ACTIONNEUR DE FREIN DOTÉ D'UN TEL ENGRENAGE À COMPOSANTS MULTIPLES, AINSI QUE PROCÉDÉ DE FABRICATION D'UN TEL ENGRENAGE À COMPOSANTS MULTIPLES

(43) Veröffentlichungstag der Anmeldung: 31.01.2024
(73) Patentinhaber: IMS Gear SE & Co. KGaA, 78166 Donaueschingen (DE)
(72) Erfinder: SÜSS, Marius, 78176 Blumberg (DE); BIRK, Sebastian, 78647 Trossingen (DE); KNÖPFLE, Michael, 78183 Hüfingen (DE); SCHACHTSCHNEIDER, Paul, 78054 Villingen-Schwenningen (DE); STOPPEL, Eugen, 78357 Mühlingen (DE); DOLD, Michael, 78199 Bräunlingen (DE)
(74) Vertreter: Westphal, Mussgnug & Partner Patentanwälte mbB

(56) Entgegenhaltungen:
- EP-A1- 3 674 582
- CN-A- 110 550 010
- US-B1- 11 287 002

## Beschreibung

Mehrkomponentenzahnrad für eine Getriebeanordnung eines Bremsaktuators, Bremsaktuator mit einem solchen Mehrkomponentenzahnrad sowie Verfahren zum Herstellen eines solchen Mehrkomponentenrades.

Die Erfindung betrifft ein Mehrkomponentenzahnrad für eine Getriebeanordnung eines Bremsaktuators, insbesondere für ein Kraftfahrzeug, einen Bremsaktuator mit einem solchen Mehrkomponentenzahnrad sowie ein Verfahren zum Herstellen eines solchen Mehrkomponentenrades.

Elektromechanische Bremsen werden immer häufiger in Kraftfahrzeugen eingesetzt. Insbesondere bei elektronischen mit Bremsassistenten ausgerüsteten oder völlig autonom fahrenden Fahrzeugen dienen elektromechanische Bremsen zum selbstständigen Bremsen des Kraftfahrzeuges.

Ein Beispiel einer elektromechanischen Bremse ist in WO 2012/010256 A1 beschrieben. Die elektromechanische Bremse umfasst einen Elektromotor, eine Getriebeanordnung sowie einen Betätigungskolben, in der Regel eine Betätigungsspindel. Der Elektromotor ist über die Getriebeanordnung mit dem Betätigungskolben in Wirkverbindung. Im Falle einer Bremsung führt der Elektromotor über seine Abtriebswelle eine rotierende Antriebsbewegung aus, welche durch die Getriebeanordnung in eine translatorische Bewegung umgewandelt wird und zum Antreiben des Betätigungskolbens dient. Der Betätigungskolben dient dann zum Betätigen mindestens einer Bremsbacke, welche beispielsweise an einer Bremsscheibe einer Radbremse eines Fahrzeuges andrückt. Regelmäßig sind solche elektromagnetischen Bremsen mit mehrstufigen Getrieben, insbesondere mehrstufigen Planetengetrieben ausgestattet, was einen nicht unbeträchtlichen Bauraum erfordert.

Im Kraftfahrzeugbau allgemein, aber auch insbesondere bei der Realisierung von elektromechanischen Bremsen, besteht das Bedürfnis, gewichtssparend und auch platzsparend Kraftfahrzeugkomponenten herzustellen. Daneben besteht aufgrund des zunehmenden Kostendrucks die Forderung, möglichst kostengünstig die für die Fahrzeuge notwendigen Komponenten herzustellen.

Hier setzt die vorliegende Erfindung an.

Die Erfindung hat das Ziel, ein Mehrkomponentenzahnrad für einen Bremsaktuator, insbesondere eines Kraftfahrzeuges, und einen zugehörenden Bremsaktuator bereitzustellen. Das Mehrkomponentenzahnrad soll dabei einen geringen Bauraum aufweisen und kostengünstig herzustellen sein und zusätzlich die notwendigen Festigkeitserfordernisse erfüllen. Zusätzlich soll ein Verfahren zum Herstellen eines solchen Mehrkomponentenzahnrades angegeben werden. Das Dokument US 11 287 002 B1 beschreibt Bremsaktuatorgetriebezahnräder hergestellt aus POM, PPA, PA oder Glasfiberpolymer, entweder pur oder in Mischung, aber immer homogen einstückig.

Dieses Ziel wird für ein Mehrkomponentenzahnrad durch die Merkmale des Anspruchs 1 gelöst.

Weiterbildungen eines solchen Mehrkomponentenzahnrades sind Gegenstand der hierauf rückbezogenen Unteransprüche.

Ein Bremsaktuator mit einem solchen Mehrkomponentenzahnrad ist Gegenstand des Anspruchs 17.

Ein Verfahren zum Herstellen eines Mehrkomponentenzahnrades nach der Erfindung ist Gegenstand des Anspruchs 18.

Das Mehrkomponentenzahnrad nach der Erfindung zeichnet sich im Wesentlichen durch folgende Merkmale aus:
- einen hülsenförmigen Stützkörper aus einem ersten Kunststoffmaterial,
- einen an den Stützkörper feststehend angeformten Zahnradradkörper aus einem zweiten Kunststoffmaterial, welches eine geringere Steifigkeit und eine höhere Elastizität als das erste Kunststoffmaterial aufweist,
- der Zahnradkörper weist eine äußere Verzahnung und eine innenliegende Spindelmutterverzahnung zur Aufnahme einer Spindel auf,
- die Spindelmutterverzahnung ist mindestens zum Teil zur äußeren Verzahnung in eine Richtung axial beanstandet angeordnet,
- der Stützkörper ragt axial mindestens teilweise in den Bereich der äußeren Verzahnung und in den Bereich der Spindelverzahnung hinein, und
- der Stützkörper weist einen kleineren Außendurchmesser auf als die äußere Verzahnung.

Ein solches Mehrkomponentenzahnrad nach der Erfindung zeichnet sich durch einen verhältnismäßig kleinen Bauraum aus bei gleichzeitig hoher Festigkeit, wie dies insbesondere bei Kraftfahrzeuganwendungen gefordert wird. Der Zahnradkörper wird dabei um den Stützkörper gespritzt, so dass beide Elemente feststehend miteinander verbunden sind. Dabei besteht der Stützkörper als auch der Zahnradkörper aus Kunststoffmaterial, wobei sich das Kunststoffmaterial für den Stützkörper eine höhere Steifigkeit und eine geringere Elastizität als das Kunststoffmaterial des Zahnradkörpers gewählt ist, dass demzufolge eine geringere Steifigkeit und eine höhere Elastizität als das Kunststoffmaterial des Stützkörpers aufweist.

Die Herstellung des erfindungsgemäßen Mehrkomponentenzahnrades erfolgt durch Kunststoffspritzgießen in 2K Technik.

In einer Ausführungsform der Erfindung besteht das Kunststoffmaterial für den Stützkörper aus einem verstärkten/gefüllten Kunststoff, wie z.B. glasfaser-, aramidfaser- oder kohlefaserverstärkt. Als Kunststoffmaterial kann hierfür beispielsweise ein glasfaservertärkter Polyphenylensulfid (PPS GF) gewählt werden. Dieses Material ist verhältnismäßig steif und wenig elastisch.

Der Zahnradkörper kann in einer Weiterbildung der Erfindung aus einem gleitoptimierten Kunststoffmaterial oder einem gleitoptimierten Thermoplast bestehen. Besonders ereignet sich hierfür Polyoxymethylen (POM). Andere Kunststoffmaterialien sind aber ebenfalls geeignet, sofern eine geringe Steifigkeit ohne hohe Elastizität sichergestellt ist.

In einer Ausführungsform des Mehrkomponentenzahnrades weist dieses einen Fortsatz zur Aufnahme eines Radial- und/oder Axiallagers, insbesondere eines Kugellagers, auf. Der Fortsatz ist dabei an der zur Spindelmutterverzahnung entgegengesetzten Seite des Zahnradkörpers platziert.

Der Fortsatz kann dabei als umlaufender Ring mit einer Vielzahl von gleichmäßig verteilten und radial nach außen gerichteten Rippen gebildet sein. Zweckmäßigerweise ist dabei der Außendurchmesser des Fortsatzes kleiner als der Außendurchmesser der äußeren Verzahnung des Mehrkomponentenzahnrades gewählt.

Der Stützkörper weist in einer anderen Ausführungsform der Erfindung eine mittige umlaufende Wandung auf, mit einer Innenwandung, welche mindestens im Bereich der Spindelmutterverzahnung und zur Spindelmutterverzahnung zugewandt in axialer Richtung gesehen und/oder in Radialrichtung gesehen stufenförmig ausgebildet ist. Eine solche stufenförmige Ausbildung der Innenwand des Stützkörpers, bei der eine oder mindestens abschnittsweise mehr als eine Abstufung vorgesehen sind, dient der mechanischen Stabilisierung des umspritzten Zahnradkörpers, insbesondere an den Bereichen, an denen im Betrieb des Zahnradkörpers dieser stark beansprucht ist, nämlich im Bereich der Spindelmutterinnenverzahnung.

Der mechanischen Stabilisierung dienen auch am Stützkörper angeordnete, distale, abgerundete Stützfinger, welche an einem Ende, der der äußeren Verzahnung des Zahnradkörpers abgewandt ist, angeordnet sind. Zweckmäßigerweise werden eine Vielzahl von solchen distalen Stützfingern an einem Ende des Stützkörpers angebracht, derart, dass diese bei fertig gespritztem Mehrkomponentenzahnrad nahe an ein Ende der Spindelmutterverzahnung heranreichen oder dieses sogar axial übergreifen.

In einer Weiterbildung der Erfindung weist der Stützkörper unter jedem Zahn der äußeren Verzahnung einen flanschartig und rippenartig in Richtung der äußeren Verzahnung hervorspringenden Wandabschnitt auf, um den jeweiligen Zahn der äußeren Verzahnung zu stützen. Zweckmäßigerweise springen diese Wandabschnitte rippenartig in einer Zahl hervor, die der Anzahl der Zähne der äußeren Verzahnung entspricht, so dass ein solcher stützender Wandabschnitt unter jedem Zahn der äußeren Verzahnung gebildet ist. Diese Stützstruktur unter jedem Zahn der äußeren Verzahnung kann auch topfförmig ausgebildet sein.

In einer anderen Weiterbildung der Erfindung ist der flanschartig hervorspringende Wandabschnitt unter jedem Zahn der äu-βeren Verzahnung dabei zweckmäßigerweise konkav ausgebildet, vorzugsweise dann, wenn eine entsprechende umlaufende konkave Vertiefung an einer dem erwähnten Fortsatz gegenüberliegende Stirnseite der äußeren Verzahnung ebenfalls konkav ausgebildet ist. Dadurch, dass durch die Spindel eine Axialkraft erzeugt wird muss über das Kugellager gestützt werden. Hier treten sehr hohe Spannungen im Teil auf.

Würde man hier am äußern Bauteil einen gewöhnlichen Radius verwenden, wären die Spannungen deutlich zu hoch. Durch die abgesenkte Form kann der Radius erhöht und der Verlauf speziell angepasst werden, so dass sich die Spannungen sich senken. Die Wandstärke ist im äußeren Körper konstant gewählt, um zum einen die Herstellung zu garantieren (konstante Wandstärken) und zum anderen, um die Spannungen gleichmäßig in äußern Körper zu verteilen.

Die äußere Verzahnung des Zahnradkörpers kann gemäß einer Weiterbildung der Erfindung eine Schraubradverzahnung und insbesondere eine Schrägverzahnung sein. Zweckmäßigerweise ist die Stützstruktur der oben erwähnten und unter den Zähnen der äu-βeren Verzahnung platzierten Wandabschnitte an den Schrägungswinkel der Verzahnung, und insbesondere einer Schrägverzahnung angepasst. Die rippenartigen Stützstrukturen des Stützkörpers unter jedem Zahn der äußeren Verzahnung folgen also mindestens annähernd der Schrägung der Zähne der Schraubverzahnung. Hierdurch ist eine optimale Stützung der äußeren Verzahnung des Zahnradkörpers durch den Stützkörper sichergestellt.

Eine weitere Ausführungsform der Erfindung besteht darin, dass der Stützkörper im Bereich der äußeren Verzahnung jeweils für jeden Zahn Hinterschnitte aufweist, derart, dass eine erste Stirnseite eines Zahnes stufenförmig in den Stützkörper eingreift.

In einer anderen Weiterbildung ist vorgesehen, dass der Stützkörper distal angeordnete Haltenasen aufweist, welche beim Umspritzen mit dem Zahnradkörper in Öffnungen des Zahnradkörpers eingreifen. Zweckmäßigerweise sind diese Öffnungen an Bindenähten des Zahnradkörpers angeordnet, die sich beim Kunststoffspritzen des Zahnradkörpers einstellen. Beim Umspritzen des Stützkörpers wird hierfür über Anspritzpunkte, z. B. drei Anspritzpunkte, die zweckmäßigerweise auf derjenigen Seite angeordnet sind, bei dem der flanschartige Vorsprung bzw. die topfförmigen Wandabschnitte des Stützkörpers vorgesehen sind, Kunststoff mit Material in ein Werkzeug eingegossen, bei dem bereits der Stützkörper eingelegt bzw. fertiggestellt ist. Das Kunststoffmaterial fließt dann über diese drei Anspritzpunkte in die Werkzeugform, wobei sich das Kunststoffmaterial zwischen jeweils zwei dieser Anspritzpunkte zusammenfließt und verbindet. An diesen Bindenähten sind dann zweckmäßigerweise die Öffnungen für die Haltenasen des Stützkörpers platziert.

Die Erfindung wird nachfolgend anhand eines Ausführungsbeispiels im Zusammenhang mit neun Figuren näher erläutert. Es zeigen:
- Figur 1: eine perspektivische Ansicht eines Mehrkomponentenzahnrades nach der Erfindung mit einer Antriebswelle und einer Spindel, die in das Mehrkomponentenzahnrad eingesetzt ist.
- Figur 2: die Getriebeanordnung von Figur 1 in seitlicher Ansicht mit Blick auf eine Stirnseite des Mehrkomponentenzahnrades,
- Figur 3: eine Schnittansicht entlang der Schnittlinie A - A von Figur 2,
- Figur 4: eine perspektivische Ansicht des Mehrkomponentenzahnrades der Figuren 1 bis 3 mit Blick von schräg hinten,
- Figur 5: das Mehrkomponentenzahnrad von Figur 4 mit Blick von schräg vorne in perspektivischer Ansicht,
- Figur 6: eine perspektivische Ansicht des in das Mehrkomponentenzahnrades eingesetzten Stützkörpers mit Blick von schräg vorne,
- Figur 7: den Stützkörper von Figur 6 in perspektivischer Ansicht von schräg hinten,
- Figur 8: eine Draufsicht auf das Mehrkomponentenzahnrad mit Blick auf eine hintere Seite des Mehrkomponentenzahnrades mit erkennbaren Anspritzpunkten, und
- Figur 9: eine Schnittdarstellung des Mehrkomponentenzahnrades gemäß der Schnittebene A - A von Figur 8.

In den nachfolgenden Figuren bezeichnen gleiche Bezugszeichen gleiche Teile mit gleicher Bedeutung, es sei denn, es wird explizit auf eine andere Bedeutung hingewiesen.

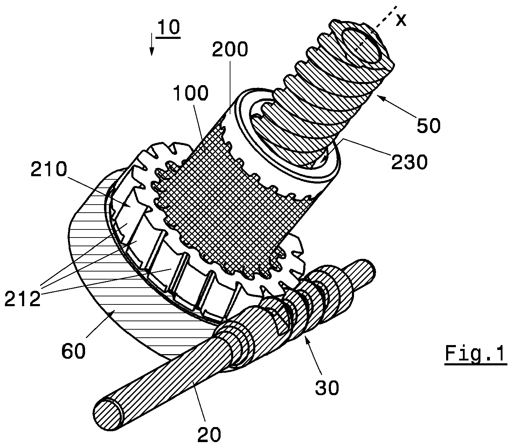

Figur 1 zeigt in perspektivischer Ansicht ein Mehrkomponentenzahnrad in einer konkreten Ausführungsform, wie es beispielsweise in einem Bremsaktuator für eine Bremsanlage in einem Kraftfahrzeug eingesetzt werden kann. Das Mehrkomponentenzahnrad ist mit dem Bezugszeichen 10 versehen und besteht aus zwei Kunststoffteilen, die durch Kunststoffspritzen feststehend miteinander verbunden sind.

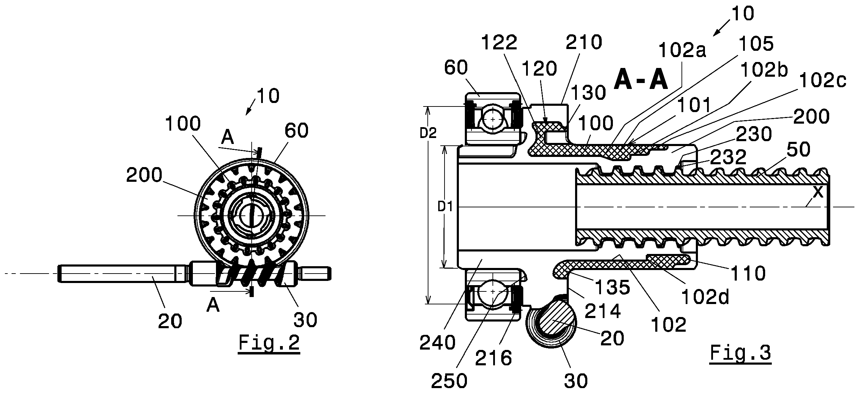

Das Mehrkomponentenzahnrad 10 weist einen Stützkörper 100 aus einem ersten Kunststoffmaterial und einem Zahnradkörper 200 aus einem zweiten Kunststoffmaterial auf. Der Zahnradkörper 200 ist an und bereichsweise um den Stützkörper 100 mittels Kunststoffspritzen feststehend angeformt. Details hierzu werden im Zusammenhang mit den nachfolgenden Figuren 2 bis 9 noch näher erläutert.

Das Mehrkomponentenzahnrad 10 verfügt am Zahnradkörper 200 über eine äußere Verzahnung 210 mit Zähnen 212. Die äußere Verzahnung 210 kann eine Schraubradverzahnung und insbesondere eine Schrägverzahnung sein. Diese äußere Verzahnung 210 steht mit einer Schnecke 30 kämmend in Eingriff, wobei die Schnecke 30 auf einer Welle 20 feststehend montiert ist, welche von einem Motor, der in Figur 1 nicht dargestellt ist, angetrieben werden kann. Im Inneren des Zahnradkörpers 200 ist (vgl. hierzu Figur 3) eine Spindelmutterverzahnung 230 vorgesehen, in welche eine Spindel 50 eingreift, so dass bei einer Drehung der Schnecke 30 die dortige rotatorische Bewegung in eine translatorische Bewegung der Spindel 50 entlang einer Längsachse X umgewandelt werden kann. Die Spindel kann z.B. auf einen Kolben in einem Hydraulikkreislauf drücken, der auf eine Bremse oder einen Bremskolben einwirkt.

Auf der zur Spindel 50 abgewandten Seite des Mehrkomponentenzahnrades befindet sich ein Fortsatz 240, auf welchem ein Radiallager und Axiallager 60 in Form eines Kugellagers aufgenommen ist.

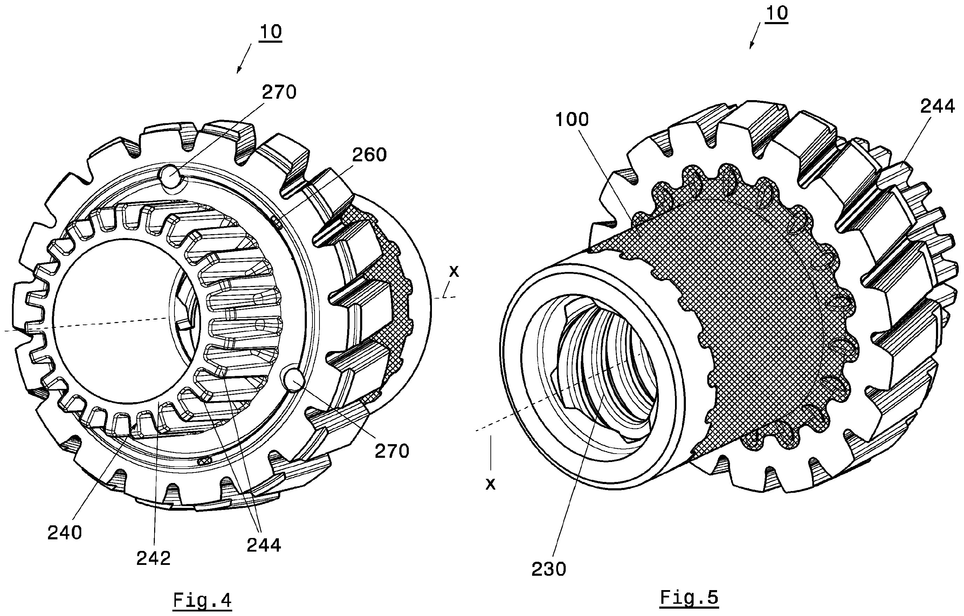

Dieser Fortsatz 240 ist besonders gut in Figur 4 zu erkennen. Der Fortsatz 240 hat einen kleineren Durchmesser D1 im Vergleich zum Durchmesser D2 der äußeren Verzahnung 210. Der Fortsatz (240) besteht aus einer ringförmigen Wandung 242 an der sich radial nach außen Rippen 244 zur Aufnahme des Lagers 60 wegerstrecken. Das Lager 60 wird vorzugsweise klemmend auf diesen Rippen 244 aufgesetzt, wofür die Außenmaße der Rippen 240 etwas größer als der Innendurchmesser des Lagers, insbesondere des Kugellagers, gewählt ist.

Figur 3 zeigt in der dortigen Schnittansicht gemäß der Schnittlinie A - A von Figur 2 den Aufbau des Mehrkomponentenzahnrades 10 mit dem Stützkörper 100 und dem an den Stützkörper 100 angespritzten Zahnradkörper 200 im Einzelnen. Der Stützkörper 100 ist hülsenförmig gestaltet mit einer Außenwandung 101 und einer Innenwandung 102. Die Außenwandung 101 verfügt über einen Großteil der Länge des Stützkörpers 100 einen gleichen Außendurchmesser, der mindestens annäherungsweise dem Außendurchmesser D1 des Fortsatzes 240 des Zahnradkörpers 200 entsprechen kann. An seinem in Figur 3 links dargestellten Ende ist der Stützkörper 100 mit einem rippenartig radial nach außen springenden Wandabschnitt 120 versehen, welcher unter die Zähne 212 der äußeren Verzahnung 210 greifen. Dabei greifen die rippenartig um die Achse X herum angeordneten Wandabschnitte 120 jeweils unter einen Zahn 212 der äußeren Verzahnung 210. Dieser Wandabschnitt 120 weist eine radiale Wandung 122 auf, die sich von der Mittenachse X radial nach außen erstreckt, wobei sich an diese radiale Wandung 122 ein weiterer Wandabschnitt anschließt mit einem distal angebrachten Hinterschnitt 130. Dieser weitere Wandabschnitt springt parallel zur Außenwandung 101 des Stützkörpers 100 zurück. Die erwähnte radiale Wandung 122 ist dabei dem Fortsatz 240 zugewandt und konkav ausgebildet. Obwohl in diesem konkreten Ausführungsbeispiel damit eine topfförmige Wandstruktur unterhalb der Zähne 212 der äußeren Verzahnung 210 dargestellt ist, liegt es auch im Bereich der vorliegenden Erfindung, dass dieser flanschartig nach außen springende Wandabschnitt 120 nicht topfförmig, sondern massiv unter den jeweiligen Zähnen 212 der äußeren Verzahnung 210 ausgebildet ist.

Zwischen diesen rippenartig nach außen springenden Wandabschnitten 120 befindet sich am Stützkörper 100 ein Verbindungsabschnitt 135, wie er in Figur 3 in der Schnittdarstellung in unter der Achse X dargestellten Art und Weise gebildet ist. Dort ragt der Verbindungsabschnitt 135 etwa L-förmig in Richtung der äußeren Verzahnung 210 des Zahnradkörpers 200.

Der Stützkörper 100 weist an seiner Innenwandung 102 im Bereich der Spindelmutterverzahnung 230 des Zahnradkörpers 200 eine stufenartige Innenkontur auf mit Abstufungen 102a, 102b und 102c. Wie darüber hinaus in Figur 3 ersichtlich, ist die Wandstärke zwischen der Außenwandung 101 und der Innenwandung 102 des Stützkörpers 100 nicht nur abgestuft gebildet, sondern auch in einem mittleren Bereich mit einer verdickten Wandung 105 versehen. Sowohl die verdickte Wandung 105 als auch die Abstufungen 102a, 102b und 102c des Stützkörpers 100 sorgen für eine besonders hohe Festigkeit und Stabilität des Stützkörpers 100 und damit auch für eine erhöhte Stabilität und Festigkeit des an den Stützkörper 100 angespritzten Zahnradkörpers 200.

Zusätzlich verfügt der Stützkörper 100 an seinem vorderen distalen Ende (vgl. in Figur 3 das rechte Ende) über sogenannte Stütznasen 100, die abgerundet ausgebildet sind und ebenfalls für eine Stabilisierung des umspritzten Zahnradkörpers 200 sorgen. Diese Stütznasen 110 überragen in dem dargestellten Ausführungsbeispiel das vordere Ende der Spindelmutterverzahnung 230 des Zahnradkörpers 200. Zurückversetzt von diesen Stützfingern 110 befindet sich eine weitere Abstufung 102d, die ebenfalls die Festigkeit des Stützkörpers 100 erhöht.

Der Zahnradkörper 200 wird beim Herstellen des Mehrkomponentenzahnrades 10 an- bzw. um den Stützkörper 100 gespritzt, derart, dass die in Figur 3 dargestellte Kontur und Gestalt des Zahnradkörpers 200 gebildet wird. Der Zahnradkörper 200 überragt etwas an seiner in Figur 3 rechts dargestellten Seite den Stützkörper 100, wobei der Außendurchmesser an diesem Ende des Zahnradkörpers 200 dem Außendurchmesser D1 des Stützkörpers 100 entspricht. In diesem Bereich hat also das Mehrkomponentenzahnrad 10 einen konstanten Außendurchmesser, der überwiegend durch die Außenwandung 101 des Körpers 100 am vorderen Ende und durch die Außenwand des Zahnradkörpers 200 gebildet wird.

Im Inneren des Zahnradkörpers 200 befindet sich die bereits erwähnte Spindelmutterverzahnung 230 zur Aufnahme einer Spindel 50. Die Spindelmutterverzahnung 230 erstreckt sich etwa bis in die Hälfte der Längserstreckung des Zahnradkörpers 200. Links von der Spindelmutterverzahnung 230 erstreckt sich radial nach außen an dem Zahnradkörper 200 ein flanschartiger Ring, der die Wandabschnitte 120 des Stützkörpers 100 überragt, wobei am äußeren Ende dieses Flansches die äußere Verzahnung 210 mit den Zähnen 212 angeordnet sind. Diese äußere Verzahnung 110 kann eine Schraubradverzahnung und insbesondere eine Schrägverzahnung sein. Der nach außen springende Flansch für die äußere Verzahnung 210 verfügt über eine erste Stirnseite 214, die in Richtung der Spindelverzahnung 230 weist und eine gegenüberliegende, zum Fortsatz 240 weisende zweite Stirnseite 216. Am Übergang zwischen dem Fortsatz 240 und der Stirnseite 216 ist eine umlaufende, konkave Vertiefung 250 vorgesehen, welche mindestens annähernd der konkaven Gestalt der radialen Wandung 122 des Stützkörpers 100 erfolgt. Hierdurch wird sichergestellt, dass sich geringe Scherkräfte auf die Außenwandung des Zahnradkörpers 200 in diesem Bereich einstellen und des Weiteren eine konstante Wanddicke des Zahnradkörpers 200 an der zweiten Stirnseite 216 im Bereich der als Stützrippen ausgebildeten Wandabschnitte 120 einstellen.

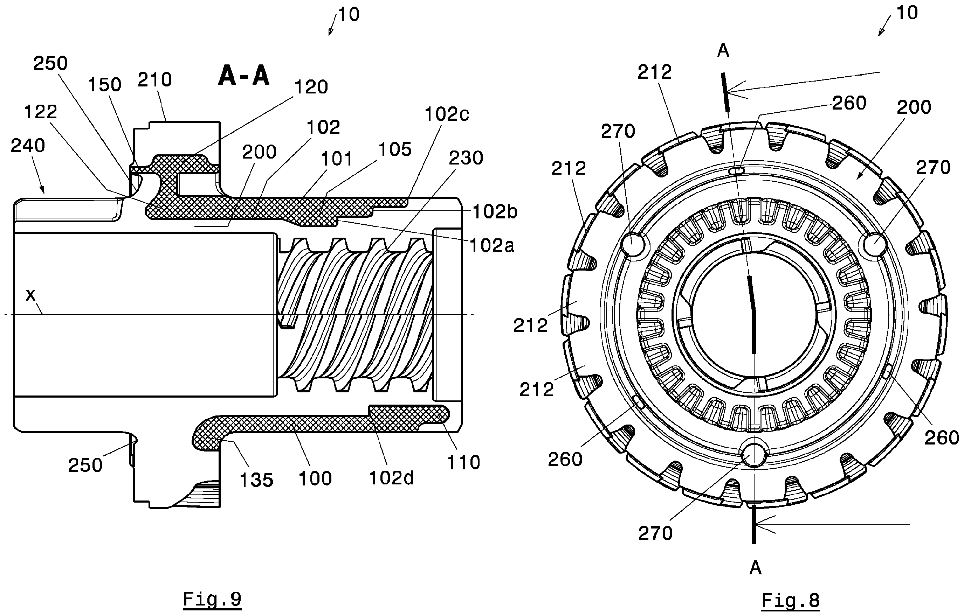

In Figur 4 und Figur 5 ist das Mehrkomponentenzahnrad 10 nochmals jeweils in perspektivischer Ansicht von vorne mit Blick auf den Fortsatz 240 bzw. mit Blick von hinten auf diejenige Seite des Mehrkomponentenzahnrades 10 abgebildet, an der die Spindel 50 in die Spindelmutterverzahnung 230 einsetzbar ist. Wie besonders aus Figur 4 zu erkennen ist, verfügt der Zahnradkörper 200 über Öffnungen 260, welche zwischen Anspritzpunkten 270, an denen der Kunststoff beim Spritzgießen des Zahnradkörpers 200 zugeführt wird. Beim Einlaufen des Kunststoffs an diesen Anspritzpunkten 270 in ein entsprechendes Werkzeug füllt sich das Werkzeug mit dem dort bereits befindlichen Stützkörper 100 allmählich, wobei sich am Ende des Spritzprozesses Bindenahtstellen zwischen den Anspritzpunkten 270 ergeben, an denen der Kunststoff zusammenläuft. Genau an diesen Stellen sind die Öffnungen 260 platziert, in welche besonders ausgebildete Haltenasen 150 des Stützkörpers 100 beim Spritzgießen eingreifen. Diese Haltenasen 150 sind besonders gut in Figur 9 oben am Stützkörper 100 zu erkennen.

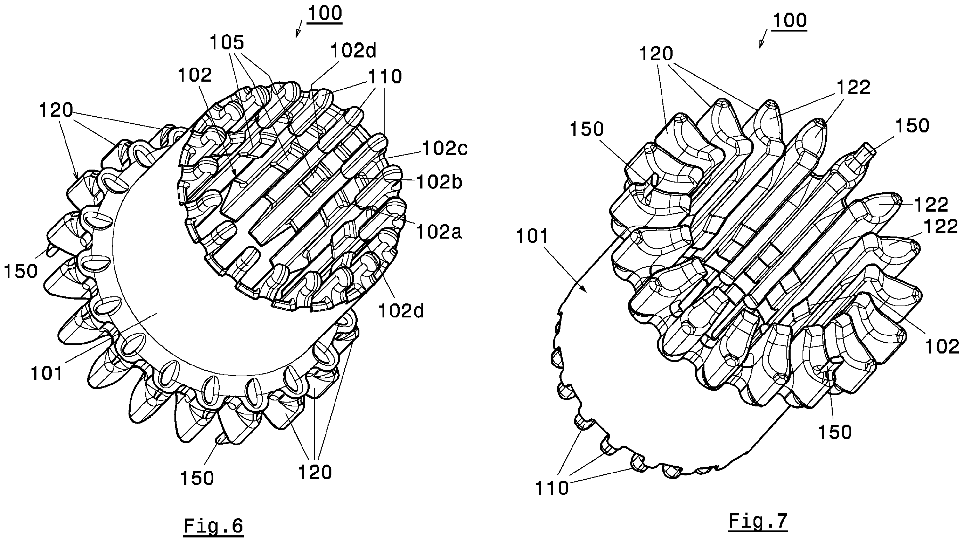

Fig. 6 zeigt den Stützkörper 113 in perspektivische Ansicht von vorne mit Blick auf seine eine Stirnseite mit den bereits erwähnten Stützfingern 110. Besonders gut sind in dieser Darstellung die Abstufungen 102a, 102b und 102c an der Innenwandung 102 zu erkennen. Ebenfalls gut zu erkennen sind die verdickten Wandungen 105. Zwischen den Wandabschnitten mit den erwähnten Abstufungen 102a, 102b und 102c befinden sich in Umfangsrichtung gesehen radial nach innen vorspringende Wandabschnitte mit den erwähnten Stützfingern 110. Etwas axial zurückversetzt von den vorderen Enden dieser Stützfinger 110 befindet sich jeweils eine weitere Abstufung 102 b. Ersichtlich wechseln sich in Umfangsrichtung Wandabschnitte mit den Stützfingern 110 und Wandabschnitte mit den verdickten Wandungen 105 wechselseitig ab. Die Anzahl der Stützfinger 110 und die Anzahl der dazwischen liegenden Wandabschnitte ist dabei vorzugsweise so gewählt, dass diese Anzahl der Zähne 212 der äu-βeren Verzahnung 210 entspricht.

Auf die gegenüberliegenden Seite zu den Stützfingern 110 befinden sich die rippenartig radial nach außen vorspringenden Wandabschnitte 120. In Figur 7 ist der Stützkörper 100 in perspektivische Draufsicht von derjenigen Seite dargestellt, auf der diese rippenartig vorspringenden Wandabschnitte 120 angeordnet sind. Die Anzahl der dieser nach außen springenden Wandabschnitte 120 entspricht ebenfalls der Anzahl der Zähne 212 der äußeren Verzahnung 210 des auf den Stützkörper 100 auf zuspitzenden Zahnkörpers 200. In Figur 7 sind besonders gut die konkav ausgebildeten radialen Wandungen 122 zu erkennen. Ebenfalls zu erkennen sind in dem dargestellten Ausführungsbeispiel drei axial aus den Stützfingern 110 heraus springende Stütznasen 150, welche, wie im Zusammenhang mit Figur 4 bereits erwähnt in zugehörende Öffnungen 260 des Zahnradkörpers 200 eingreifen.

In Figur 8 ist noch einmal das Mehrkomponentenzahnrad 10 in Draufsicht auf die Seite mit den drei Anspritzpunkten 270 dargestellt. Figur 9 zeigt die zugehörende Schnittansicht A-A entlang der Schnittlinie A-A von Figur 8. Die bereits bekannten Bezugszeichen werden in diesen Darstellungen für die gleichen Teile weiter verwendet.

Hergestellt wird dieses Mehrkomponentenzahnrades 10 zweckmäßigerweise folgendermaßen:
- Spritzgießen des hülsenförmigen Stützkörpers 100 aus einem ersten Kunststoffmaterial,
- Umspritzen des Stützkörpers (100) mit einem Zahnradradkörper (200) aus einem zweiten Kunststoffmaterial, welches eine geringere Steifigkeit und eine höhere Elastizität als das erste Kunststoffmaterial aufweist, wobei
- der Zahnradkörper 200 eine äußere Verzahnung 210 und eine innenliegende Spindelmutterverzahnung 230 zur Aufnahme der Spindel 50 aufweist,
- die Spindelmutterverzahnung 230 mindestens zum Teil zur äu-βeren Verzahnung 210 in eine Richtung axial beanstandet angeordnet ist,
- der Stützkörper 200 axial mindestens teilweise in den Bereich der äußeren Verzahnung 210 und in den Bereich der Spindelverzahnung 230 hineinragt, und
- der Stützkörper (100) einen kleineren Außendurchmesser D1 aufweist als die äußere Verzahnung 210.

Dabei kann der Stützkörper (100) entweder vorgefertigt in ein Spritzwerkzeug eingelegt werden und das Spritzgießen des Zahnradkörpers erfolgt anschließend in einem geeigneten Werkzeug. Alternativ kann aber entsprechend sog. 2K-Technik ein besonderes Werkzeug vorgesehen werden, bei dem zuerst der Stützkörper 100 kunststoffgespritzt wird und anschließend in dem gleichen Werkzeug auf diesen Stützkörper 100 der Zahnradkörper 200 gespritzt wird. Bei beiden Verfahren verfügt der Zahnradkörper 200 über mehrere Anspritzpunkte 270, die vorzugsweise axial an derjenigen Seite liegen, die den rippenförmigen Wandabschnitten 120 des Stützkörpers 100 zugewandt sind.

### Bezugszeichenliste

- 10: Mehrkomponentenzahnrad
- 20: Welle
- 30: Schnecke
- 50: Spindel, Betätigungskolben
- 60: Radiallager und Axiallager

- 100: Stützkörper
- 101: Außenwandung des Stützkörpers
- 102: Innenwandung des Stützkörpers
- 102a, 102b, 102c: Abstufungen
- 105: verdickte Wandung
- 110: Stützfinger
- 120: Wandabschntt
- 122: radiale Wandung
- 130: Hinterschnitt
- 135: Verbindungsabschnitt
- 150: Stütznasen

- 200: Zahnradkörper
- 210: äußerer Verzahnung
- 212: Zähne der äußeren Verzahnung
- 214: erste Stirnseite der äußeren Verzahnung 210
- 216: zweite Stirnseite der äußeren Verzahnung 210
- 230: Spindelmutterverzahnung
- 232: Ende der Spindelmutterverzahnung
- 240: Fortsatz
- 242: umlaufender Ring
- 244: Rippen
- 250: umlaufende, konkave Vertiefung
- 260: Öffnungen
- 270: Anspritzpunkte

- D1: Außendurchmesser des Fortsatzes 240
- D2: Außendurchmesser der äußeren Verzahnung 210
- X: Mitten- und Längsachse
- A-A: Schnitt

## Patentansprüche

1. Mehrkomponentenzahnrad (10) für eine Getriebeanordnung eines Bremsaktuators, insbesondere eines Kraftfahrzeuges, mit folgenden Merkmalen:
- einen hülsenförmigen Stützkörper (100) aus einem ersten Kunststoffmaterial,
- einen an den Stützkörper (100) feststehend angeformten Zahnradradkörper (200) aus einem zweiten Kunststoffmaterial, welches eine geringere Steifigkeit und eine höhere Elastizität als das erste Kunststoffmaterial aufweist,
- der Zahnradkörper (200) weist eine äußere Verzahnung (210) und eine innenliegende Spindelmutterverzahnung (230) zur Aufnahme einer Spindel(50) auf,
- die Spindelmutterverzahnung (230) ist mindestens zum Teil zur äußeren Verzahnung (210) in einer Richtung axial beanstandet angeordnet,
- der Stützkörper (100) ragt axial mindestens teilweise in den Bereich der äußeren Verzahnung (210) und in den Bereich der Spindelmutterverzahnung (230) hinein, und
- der Stützkörper (100) weist einen kleineren Außendurchmesser auf als die äußere Verzahnung (210).

2. Mehrkomponentenzahnrad (10) nach Anspruch 1,
**dadurch gekennzeichnet, dass** das erste Kunststoffmaterial glasfaser-, aramidfaser oder kohlefaserverstärktes Kunststoffmaterial, insbesondere Polyphenylensulfid (PPS), ist.

3. Mehrkomponentenzahnrad (10) nach Anspruch 1 oder 2,
**dadurch gekenzeichnet,** dass das zweite Kunststoffmaterial ein gleitoptimiertes Kunststoffmaterial oder Thermoplast, insbesondere Polyoxymetylen (POM), ist.

4. Mehrkomponentenzahnrad (10) nach einem der Ansprüche 1 bis 3, **dadurch gekenzeichnet,**dass der Zahnradkörper (200) an der zur Spindelmutterverzahnung (230) entgegengesetzten axialen Seite einen Fortsatz (240) aufweist zur Aufnahme eines Radial- und Axiallagers (60), insbesondere eines Kugellagers.

5. Mehrkomponentenzahnrad (10) nach Anspruch 4,
**dadurch gekenzeichnet,** dass der Fortsatz (240) als umlaufender Ring (242) mit einer Vielzahl von gleichmäßig verteilten und radial nach außen gerichteten Rippen (244) gebildet ist, wobei der Außendurchmesser (D1) des Fortsatzes (240) kleiner als der Außendurchmesser (D2) der äußeren Verzahnung (210) ist.

6. Mehrkomponentenzahnrad (10) nach einem der vorherigen Ansprüche, **dadurch gekenzeichnet,** dass der Stützkörper (100) eine mittige umlaufende Wandung aufweist mit einer Innenwandung (102), die mindestens im Bereich der Spindelmutterverzahnung (230) und zur Spindelmutterverzahnung (230) zugewandt in axialer Richtung gesehen und/oder in Radialrichtung gesehen stufenförmig ausgebildet ist.

7. Mehrkomponentenzahnrad nach Anspruch 6,
**dadurch gekenzeichnet,** dass die Innenwandung (102) in Axialrichtung gesehen mindestens abschnittsweise mehr als eine Abstufung (102a, 102b, 102c,) aufweist.

8. Mehrkomponentenzahnrad (10) nach einem der vorherigen Ansprüche, **dadurch gekenzeichnet,** dass der Stützkörper (100) an seinem der äußeren Verzahnung (210) abgewandten Ende eine Vielzahl von distalen, abgerundeten Stützfingern (110) aufweist, welche in axialer Richtung gesehen bis mindestens nahe an ein Ende (232) der Spindelmutterverzahnung (230) heranreichen oder diese axial übergreifen.

9. Mehrkomponentenzahnrad (10) nach einem der vorherigen Ansprüche, **dadurch gekennzeichnet, dass** der Stützkörper (100) mindestens annähernd halb so lang wie der Zahnradkörper (200) ausgebildet ist.

10. Mehrkomponentenzahnrad (10) nach einem der vorherigen Ansprüche, **dadurch gekenzeichnet**, dass der Stützkörper (100) unter jedem Zahn (212) der äußeren Verzahnung (210) einen ausgebildeten und radial zur Schraubradverzahnung (230) gerichteten Wandabschnitt (120) zur Stützung des jeweiligen Zahnes (212) der äußeren Verzahnung (210) aufweist.

11. Mehrkomponentenzahnrad (10) nach Anspruch 10,
**dadurch gekenzeichnet,** dass der topfförmig ausgebildete Wandabschnitt (120) im Bereich seiner radialen Wandung (122) konkav ausgebildet ist.

12. Mehrkomponentenzahnrad (10) nach einem der Ansprüche 1 bis 11, **dadurch gekenzeichnet**, dass der Zahnradkörper (200) an der zur Spindelmutterverzahnung (230) abgewandten Axialfläche der äußeren Verzahnung (210) eine umlaufende, konkave Vertiefung (250) aufweist.

13. Mehrkomponentenzahnrad (10) nach Anspruch 1 oder 2,
**dadurch gekenzeichnet,** dass die äußere Verzahnung (210) des Zahnradkörpers (200) eine Schraubradverzahnung, insbesondere eine Schrägverzahnung, ist.

14. Mehrkomponentenzahnrad (10) nach einem der Ansprüche 1 bis 13, **dadurch gekenzeichnet**, dass der Stützkörper (100) im Bereich der Schraubradverzahnung (210) jeweils für jeden Zahn (212) der äußeren Verzahnung (210) Hinterschnitte (130) aufweist derart, dass eine erste Stirnseite (214) eines Zahnes (212) stufenförmig in den Stützkörper (100) eingreift.

15. Mehrkomponentenzahnrad (10) nach einem der Ansprüche 1 bis 14, **dadurch gekenzeichnet**, dass der Stützkörper (100) distal angeordnete Haltenasen (150) aufweist, welche beim Umspritzen mit dem Zahnradkörper (200) in Öffnungen (260) des Zahnradkörpers (200) eingreifen.

16. Mehrkomponentenzahnrad nach Ansprüche 15
**dadurch gekenzeichnet,** dass die Öffnungen (260) an Bindenähten des Zahnradkörpers (200) angeordnet sind.

17. Bremsaktuator, insbesondere für ein Kraftfahrzeug, mit einer von einen Motor angetriebenen Getriebeanordung, durch welche eine rotatorische Bewegung einer Welle (30) des Motors in eine translatorische Bewegung eines Betätigungskolbens oder einer Spindel (50) umwandelbar ist, wobei die Getriebeanordnung ein Mehrkomponentenzahnrad (10) gemäß einem der Ansprüche 1 bis 16 aufweist.

18. Verfahren zum Herstellen eines Mehrkomponentenzahnrades (10) gemäß einem der Ansprüche 1 bis 16 mit folgenden Verfahrensschritten:
- Spritzgießen eines hülsenförmigen Stützkörpers (100) aus einem ersten Kunststoffmaterial,
- Umspritzen des Stützkörpers (100) mit einem Zahnradradkörper (200) aus einem zweiten Kunststoffmaterial, welches eine geringere Steifigkeit und eine höhere Elastizität als das erste Kunststoffmaterial aufweist, wobei
- der Zahnradkörper (200) eine äußere Verzahnung (210) und eine innenliegende Spindelmutterverzahnung (230) zur Aufnahme einer Spindel (50) aufweist,
- die Spindelmutterverzahnung (230) mindestens zum Teil zur äußeren Verzahnung (210) in eine Richtung axial beanstandet angeordnet ist,
- der Stützkörper (200) axial mindestens teilweise in den Bereich der äußeren Verzahnung (210) und in den Bereich der Spindelverzahnung (230) hineinragt, und
- der Stützkörper (100) einen kleineren Außendurchmesser aufweist als die äußere Verzahnung (210).

19. Verfahren zum Herstellen eines Mehrkomponentenzahnrades (10) nach Anspruch 18, **dadurch gekenzeich net,** dass der Stützkörper (100) in ein Spritzwerkzeug eingelegt wird oder ist und das Kunststoffspritzen des Zahnradkörpers (200) über mehrere Anspritzpunkte (270) axial von derjenigen Seite des Stützkörpers (100) erfolgt, an dem die topfförmigen Wandungen (120) vorgesehen sind.

## Claims

1. Multi-component gear wheel (10) for a gear assembly of a brake actuator, in particular of a motor vehicle, having the following features:
- a sleeve shaped support body (100) made of a first plastic material,
- a gear wheel body (200), rigidly formed onto the support body (100) and made of a second plastic material which comprises a lower rigidity and a higher elasticity than the first plastic material,
- the gear wheel body (200) comprises an outer toothing (210) and a spindle nut toothing (230) arranged inside for engaging a spindle (50),
- the spindle nut toothing (230) is arranged, at least partially, axially in one direction at a distance to the outer toothing (210),
- the support body (100) extends axially at least partially into the region of the outer toothing (210) and into the region of the spindle nut toothing (230), and
- the support body (100) comprises a smaller outer diameter than the outer toothing (210).

2. Multi-component gear wheel (10) in accordance with claim 1,
**characterized in that** the first plastic material is a glass fiber, an aramide fiber or a carbon fiber reinforced plastic material, in particular polyphenylene sulfide (PPS).

3. Multi-component gear wheel (10) in accordance with claim 1 or 2,
**characterized in that** the second plastic material is a gliding-optimized plastic material or a thermoplastic, in particular polyoxymethylene (POM).

4. Multi-component gear wheel (10) in accordance with any of claims 1 to 3, **characterized in that** the gear wheel body (200) comprises, on the axial side opposite the spindle nut toothing (230), an extension (240) for receiving a radial and an axial bearing (60), in particular a ball bearing.

5. Multi-component gear wheel (10) in accordance with claim 4,
**characterized in that** the extension (240) is formed as a circumferential ring (242) having a plurality of evenly distributed and radially outwards directed ribs (244), wherein the outer diameter (D1) of the extension (240) is smaller than the outer diameter (D2) of the outer toothing (210).

6. Multi-component gear wheel (10) in accordance with any of the preceding claims, **characterized in that** the support body (100) comprises a centered circumferential walling, having an inner walling (102) which is implemented, at least in the region of the spindle nut toothing (230) and, when viewed in axial direction, facing the spindle nut toothing (230) and/or, when viewed in radial direction, in a step-like form.

7. Multi-component gear wheel (10) in accordance with claim 6,
**characterized in that** the inner walling (102), when viewed in an axial direction, comprises, at least in sections, more than one gradation (102a, 102b, 102c).

8. Multi-component gear wheel (10) in accordance with any of the preceding claims, **characterized in that** the support body (100) comprises, on its end which faces away from the outer toothing (210), a plurality of distal, rounded support fingers (110) which, when viewed in axial direction, extend at least close to one end (232) of the spindle nut toothing (230) or extend axially over the latter.

9. Multi-component gear wheel (10) in accordance with any of the preceding claims, **characterized in that** the support body (100) is formed to be at least approximately half as long as the gear wheel body (200).

10. Multi-component gear wheel (10) in accordance with any of the preceding claims, **characterized in that** the support body (100) comprises, under each tooth (212) of the outer toothing (210), a wall section (120), formed and radially directed toward the spindle nut toothing (230), for supporting the respective tooth (212) of the outer toothing (210).

11. Multi-component gear wheel (10) in accordance with claim 10,
**characterized in that** the cup-shape formed wall section (120) is concave in the region of its radial walling (122).

12. Multi-component gear wheel (10) in accordance with any of claims 1 to 11, **characterized in that** the gear wheel body (200) comprises a circumferential, concave indentation (250) on the axial surface of the outer toothing (210) which faces away from the spindle nut toothing (230).

13. Multi-component gear wheel (10) in accordance with claim 1 or 2,
**characterized in that** the outer toothing (210) of the gear wheel body (200) is a bevel gear toothing, in particular a helical toothing.

14. Multi-component gear wheel (10) in accordance with any of claims 1 to 13, **characterized in that** the support body (100) comprises, in the region of the bevel gear toothing (210), respective undercuts (130) for each tooth (212) of the outer toothing (210), such that a first end face (214) of a tooth (212) engages step-like with the support body (100).

15. Multi-component gear wheel (10) in accordance with any of claims 1 to 14, **characterized in that** the support body (100) comprises distally arranged retaining lugs (150) which engage with openings (260) of the gear wheel body (200) during overmolding with the gear wheel body (200).

16. Multi-component gear wheel (10) in accordance with claim 15,
**characterized in that** the openings (260) are arranged on joint lines of the gear wheel body (200).

17. Brake actuator, in particular for a motor vehicle, having a motor-driven gear assembly, by means of which a rotational movement of a shaft (30) of the motor can be converted into a translational movement of an actuating piston or of a spindle (50), wherein the gear assembly comprises a multi-component gear wheel (10) in accordance with any of claims 1 to 16.

18. Method for manufacturing a multi-component gear wheel (10) in accordance with any of claims 1 to 16, having the following method steps:
- injection molding of a sleeve shaped support body (100) from a first plastic material,
- overmolding of the support body (100) with a gear wheel body (200) made of a second plastic material which comprises a lower rigidity and a higher elasticity than the first plastic material, wherein
- the gear wheel body (200) comprises an outer toothing (210) and a spindle nut toothing (230) arranged inside for engaging a spindle (50),
- the spindle nut toothing (230) is arranged, at least partially, axially in one direction at a distance to the outer toothing (210),
- the support body (100) extends axially at least partially into the region of the outer toothing (210) and into the region of the spindle nut toothing (230), and
- the support body (100) comprises a smaller outer diameter than the outer toothing (210).

19. Method for manufacturing a multi-component gear wheel (10) in accordance with claim 18, **characterized in that** the support body (100) is or has been placed in an injection mold and the plastic injection molding of the gear wheel body (200) is carried out at numerous injection points (270) axially from the side of the support body (100) on which the cup-shaped wallings (120) are provided.

## Revendications

1. Roue dentée multicomposants (10) pour un dispositif de transmission d'un actionneur de freins, notamment d'un véhicule automobile comprenant les caractéristiques suivantes :
- un corps d'appui (100) en forme de manchon en une première matière plastique,
- un corps de roue dentée (200) surmoulé de manière fixe sur le corps d'appui (100) en une seconde matière plastique ayant une rigidité inférieure et une élasticité supérieure à celle de la première matière plastique,
- le corps de roue dentée (200) a une denture extérieure (210) et une denture intérieure d'écrou de broche (230) pour recevoir une broche (50),
- la denture d'écrou de broche (230) est au moins en partie écartée axialement de la denture extérieure (210),
- le corps d'appui (100) vient partiellement en saillie axialement dans la zone de la denture extérieure (210) et dans la zone de la denture d'écrou de broche (230), et
- le corps d'appui (100) a un diamètre extérieur inférieur à celui de la denture extérieure (210).

2. Roue dentée multicomposants (10) selon la revendication 1,
**caractérisée en ce que**
la première matière plastique est une matière plastique renforcée par des fibres de verre, des fibres aramides ou des fibres de carbone, notamment en polysulfure de phénylène (PPS).

3. Roue dentée multicomposants (10) selon la revendication 1 ou 2,
**caractérisée en ce que**
la seconde matière plastique est une matière plastique à glissement optimisé ou une matière thermoplastique, notamment du polyoxyméthylène (POM).

4. Roue dentée multicomposants (10) selon l'une des revendications 1 à 3,
**caractérisée en ce que**
le corps de roue dentée (200) comporte sur son côté axial à l'opposé de la denture d'écrou de broche (230), un prolongement (240) pour recevoir un palier radial ou axial (60), notamment un palier à roulement à billes.

5. Roue dentée multicomposants (10) selon la revendication 4, **caractérisée en ce que**
le prolongement (240) est constitué par un anneau périphérique (242) avec un ensemble de nervures (244) réparties régulièrement et orientées radialement vers l'extérieur,
* le diamètre extérieur (D1) du prolongement (240) est inférieur au diamètre extérieur (D2) de la denture extérieure (210).

6. Roue dentée multicomposants (10) selon l'une des revendications précédentes,
**caractérisée en ce que**
le corps d'appui (100) a une paroi centrale périphérique avec une paroi intérieure (102) qui est étagée au moins dans la zone de la denture d'écrou de broche (230) et qui, tournée vers la denture d'écrou de broche (230), vue dans la direction axiale et/ou dans la direction radiale.

7. Roue dentée multicomposants (10) selon la revendication 6, **caractérisée en ce que**
la paroi intérieure (102), vue dans la direction axiale, comporte au moins par segment plus d'un étagement (102a, 102b, 102c).

8. Roue dentée multicomposants (10) selon l'une quelconque des revendications précédentes,
**caractérisée en ce que**
le corps d'appui (100) présente à son extrémité opposée à la denture extérieure (210), un ensemble de doigts d'appui (110) arrondis, distaux, et qui, vus dans la direction axiale, arrivent au moins jusqu'à proximité d'une extrémité (232) de la denture d'écrou de broche (230) ou dépassent axialement celle-ci.

9. Roue dentée multicomposants (10) selon l'une des revendications précédentes,
**caractérisée en ce que**
la longueur du corps d'appui (100) est au moins sensiblement la moitié de la longueur du corps de roue dentée (200).

10. Roue dentée multicomposants (10) selon l'une des revendications précédentes,
**caractérisée en ce que**
sous chaque dent (212) de la denture extérieure (210), le corps d'appui (100) a une denture hélicoïdale (230), radiale, orientée vers le segment d'appui (120) pour soutenir la dent respective (212) de la denture extérieure (210).

11. Roue dentée multicomposants (10) selon la revendication 10, **caractérisée en ce que**
le segment de paroi (120) en forme de pot est concave dans la zone de sa paroi radiale (122).

12. Roue dentée multicomposants (10) selon l'une des revendications 1 à 11,
**caractérisée en ce que**
la surface axiale de la denture extérieure (210) à l'opposé de la denture d'écrou de broche (230), du corps de roue dentée (200) présente une rigidification (250) périphérique concave.

13. Roue dentée multicomposants (10) selon la revendication 1 ou 2, **caractérisée en ce que**
la denture extérieure (210) du corps de roue dentée (200) a une denture hélicoïdale notamment une denture oblique.

14. Roue dentée multicomposants (10) selon l'une des revendications 1 à 13,
**caractérisée en ce que**
dans la région de la denture hélicoïdale (210), le corps d'appui (100) présente respectivement pour chaque dent (212) de la denture extérieure (210), des contredépouilles (130) de façon qu'une première face frontale (214) d'une dent (212) pénètre de façon étagée dans le corps d'appui (100).

15. Roue dentée multicomposants (10) selon l'une des revendications 1 à 14,
**caractérisée en ce que**
le corps d'appui (100) comporte des becs de retenue (150) en position distale qui, au surmoulage par injection, pénètrent avec le corps de roue dentée (200) dans des ouvertures (260) du corps de roue dentée (200).

16. Roue dentée multicomposants selon la revendication 15, **caractérisée en ce que**
les liaisons du corps de roue dentée (200) ont les ouvertures (260).

17. Actionneur de freins, notamment de véhicule automobile comportant un dispositif de transmission entraîné par un moteur et transformant le mouvement de rotation d'un arbre (30) du moteur en un mouvement de translation d'un piston d'actionnement ou d'une broche (50),
dispositif de transmission comportant une roue dentée multicomposants (10) selon l'une des revendications 1 à 16.

18. Procédé de réalisation d'une roue dentée multicomposants (10) selon l'une des revendications 1 à 16, comprenant les étapes suivantes consistant à :
- mouler par injection un corps d'appui (100) en forme de manchon en une première matière plastique,
- surmouler par injection le corps d'appui (100) avec un corps de roue dentée (200) en une seconde matière plastique ayant une rigidité inférieure et une élasticité supérieure à celles de la première matière plastique,
* le corps de roue dentée (200) ayant une denture extérieure (210) et une denture d'écrou de broche (230) intérieure pour recevoir une broche (50),
- la denture d'écrou de broche (230) étant écartée dans la direction axiale au moins en partie par rapport à la denture extérieure (210),
- le corps d'appui (200) pénètre axialement au moins en partie dans la zone de la denture extérieure (210) et dans la zone de la denture de broche (230), et
- le corps d'appui (100) a un diamètre extérieur inférieur à celui de la denture extérieure (210).

19. Procédé de réalisation d'une roue dentée multicomposants (10) selon la revendication 18,
**caractérisé en ce que**
le corps d'appui (100) est placé dans un moule d'injection ou est dans celui-ci et on injecte la matière plastique du corps de roue dentée (200) en plusieurs points d'injection (270), axialement par le côté du corps d'appui (100) comportant les parois (120) en forme de pot.
